Europäisches Patentamt

**European Patent Office**

**Office européen des brevets**

(19)

(11) Veröffentlichungsnummer: **0 021 316**
A1

(12) **EUROPÄISCHE PATENTANMELDUNG**

(21) Anmeldenummer: **80103361.4**

(22) Anmeldetag: **17.06.80**

(51) Int. Cl.³: **C 21 C 5/30**, G 01 N 27/06

(30) Priorität: **20.06.79 DE 2924791**

(43) Veröffentlichungstag der Anmeldung: **07.01.81**
**Patentblatt 81/1**

(84) Benannte Vertragsstaaten: **AT FR GB IT SE**

(71) Anmelder: **Krupp Stahlwerke Südwestfalen AG,
Postfach 10 12 20, D-5900 Siegen 1 (DE)**

(72) Erfinder: **Valentin, Peter, Dr.-Ing., Haardtstrasse 11,
D-5900 Siegen 21 (DE)**

(74) Vertreter: **Kuborn, Walter, Dipl.-Ing. et al, Patentanwälte
Dipl.-Ing. Walter Kuborn Dipl.-Phys. Dr. Peter Palgen
Mulvanystrasse 2, D-4000 Düsseldorf (DE)**

(54) **Verfahren und Vorrichtung zur Ermittlung der Gehalte an Schwermetalloxiden in flüssigen Schlacken.**

(57) Ein Verfahren und eine Vorrichtung zur Ermittlung der Gehalte an Schwermetalloxiden in flüssigen Schlacken (2), bei welchem der Gehalt an Schwermetallen über eine Messung der elektrischen Leitfähigkeit der flüssigen Schlacke (2) ermittelt wird. An die Stelle der labormässigen Untersuchung des Schwermetallgehalts der Schlacke (2) tritt die sofortige Bestimmung im metallurgischen Gefäss, welche eine Steuerung des Schmelz- oder Umschmelzprozesses derart gestattet, dass die besagten Gehalte möglichst niedrig werden und Einsparungen an zuzulegierenden Schwermetallen erreicht werden können. Die Messung geschieht fortlaufend mittels Eintauchelektroden (3), die einen Abstand von 10-30 mm voneinander aufweisen.

0021316

Krupp Stahlwerke Südwestfalen AG
in 5900 Siegen 1


Verfahren und Vorrichtung zur Ermittlung der
Gehalte an Schwermetalloxiden in flüssigen
Schlacken.


Die Erfindung bezieht sich auf ein Verfahren
der dem Oberbegriff des Anspruchs 1 zugrundeliegenden Art sowie eine Vorrichtung zur Durchführung
dieses Verfahrens gemäß dem Oberbegriff des Anspruchs
10.

Die Kenntnis der Gehalte an Schwermetalloxiden,
insbesondere von Chromoxid, in Schlacken von
Legierungen, insbesondere Stahllegierungen und
vornehmlich Legierungen auf der Basis Nickel
oder Kobalt ist für die Wirtschaftlichkeit
der ablaufenden betrieblichen Prozesse von
ausschlaggebender Bedeutung. Im Falle von nicht
ausreduzierten Schlacken können die entsprechenden Gehalte der Schwermetalle in der Schlackenphase hohe Werte annehmen. Diese in der Schlackenphase gelösten Mengen an Schwermetallen sind der
Metallphase entzogen und müssen deshalb zwecks
Erzielung der erforderlichen chemischen Zusammensetzung des zu produzierenden Werkstoffs über
zusätzliche Legierungsmittel in die Metallschmelze
eingebracht werden.

Dies führt jedoch zu erhöhten Werkstoffkosten und gefährdet die Wirtschaftlichkeit des Verfahrens.

Entsprechend dem bisherigen Kenntnisstand müssen für die Bestimmung der Gehalte an Schwermetalloxiden in der Schlackenphase Proben innerhalb des betrieblichen Ablaufs genommen, in das chemische Laboratorium geschickt und dort schließlich mit den verschiedenen Verfahren - naßchemisch oder mittels Röntgenfluoreszenz - analysiert werden.

Dies ist ein zusätzlicher Prozeßschritt mit einer möglichen zeitlichen Dauer von bis zu einigen Stunden, der zu Störungen oder Verzögerungen im Betriebsablauf infolge z. B. erstarrender Schlacke bei Temperaturen zwischen 1500 und 1700° C führen kann.

Eine direkte Steuerung des Prozesses hinsichtlich einer Minimierung der Gehalte an Schwermetalloxiden in der Schlackenphase ist aufgrund des beschriebenen Zeitbedarfs für die Analyse nicht möglich.

Die Aufgabe der Erfindung besteht in der Schaffung eines Verfahrens zur Bestimmung der Gehalte an Schwermetalloxiden in der Schlackenphase, welches schnell durchführbar ist, so daß eine direkte Prozeßsteuerung ermöglicht wird, sowie in der Schaffung einer Vorrichtung zur Durchführung des Verfahrens.

Diese Aufgabe wird ausgehend von dem eingangs genannten Verfahren bzw. der eingangs genannten Vorrichtung erfindungsgemäß durch die im Kennzeichen des Anspruchs 1 bzw. des Anspruchs 10 genannten Maßnahmen gelöst.

Die Schlacken besitzen in flüssigem Zustand
eine elektrische Leitfähigkeit, die stark von dem
Gehalt an Schwermetalloxiden abhängt. Durch die
Messung der Leitfähigkeit ist daher ein ausreichend genauer Rückschluß auf den Gehalt
an Schwermetalloxiden möglich. Ein besonderer
Vorteil liegt darin, daß keine Probe entnommen
und an anderer Stelle analysiert werden muß,
sondern daß die Gehaltsbestimmung mittels
einer einzigen elektrischen Messung vonstattengehen kann, die praktisch augenblicklich den erforderlichen Meßwert als
Grundlage für die manuelle oder automatische
Berechnung des Schwermetalloxidgehalts in der
Schlackenphase ergibt.

Die Leitfähigkeitsmessung kann insbesondere
auch während der Vakuumbehandlung der Schmelze
erfolgen.

Es ist hierdurch möglich, den Verlauf
der im Vakuum ablaufenden Reaktion bzw. der
Verteilung der Schwermetallanteile auf
Schmelze und Schlacke im Reaktionsgefäß zu
verfolgen.

Vorteilhaft geschieht die Leitfähigkeitsermittlung fortgesetzt.

Der Ausdruck "fortgesetzt" soll sowohl eine
kontinuierliche Messung, die allerdings wegen der
fehlenden Haltbarkeit der Elektroden meist nicht
in Betracht kommen wird, als auch eine intermittierend unter jeweils erneutem Eintauchen der Elektroden in die Schmelze wiederholte
Messung umfassen.

Eine wesentliche Ausgestaltung des erfindungsgemäßen Verfahrens besteht darin, daß *die die* Leitfähigkeit darstellenden elektrischen Signale
als Eingangssignale für eine Steuerung der
Gehalte an Schwermetalloxiden in der Schlacke
verwendet werden.

Hierdurch ist der Weg zu einer automatischen
Steuerung des Verfahrensablaufs hinsichtlich der
Schwermetalloxide eröffnet.

Messungen der Leitfähigkeit von schmelzflüssigen Schlacken mittels eintauchender Elektroden sind an sich aus Stahl und Eisen 99 (1979)
Nr. 3, Seiten 113 bis 116 bekannt. Diese
Messungen sind aber nur vorgenommen worden,
weil die Kenntnis der elektrischen Eigenschaften der Schlacke für die Steuerung eines
Elektro-Schlacke-Umschmelzprozesses von Bedeutung ist, nicht jedoch, um bestimmte Gehalte
an Schwermetalloxiden oder dergleichen in der
Schlacke zu bestimmen.

Es ist zweckmäßig, bei der erfindungsgemäßen
Bestimmung der Gehalte an Schwermetalloxiden
die nachfolgenden Arbeitsregeln einzuhalten:

- Klare Trennung von Metallbad und Schlacke
- Keine anderweitigen metallurgischen Arbeiten,
  z. B. keine Zugabe von Legierungen, insbesondere von Si-Trägern
- Weitgehende Verflüssigung der Schlacke
- Ort der Widerstandsmessung in genügendem Abstand von Feuerfestmaterialien

- Einsatz der Meßvorrichtung in gut getrocknetem,
  d. h. feuchtigkeitsfreiem Zustand
- Sofern die Messung der Leitfähigkeit von
  schmelzflüssigen Schlacken in einem
  Elektrolichtbogenofen erfolgt, sollte
  die Stromzuführung zu den Ofenelektroden abgeschaltet sein.

Vorteilhafte Ausbildungen und Weiterbildungen sind
Gegenstand der Unteransprüche.

Für die Bestimmung und Auswertung der elektrischen Größen gilt folgendes:

- die Messung von Schlackentemperatur sowie von
  Strom und Spannung, die den spezifischen Widerstand bzw. die Leitfähigkeit der Schlacke ergeben, erfolgt vorzugsweise gleichzeitig mittels
  geeigneter Sonden
- die Analyse der Ergebnisse der Spannungs- und
  Strommessung erfolgt mit Hilfe vorher erstellter Parameter unter Berücksichtigung der Temperatur
- die Auswertung erfolgt unter Zuhilfenahme von
  Mikroprozessoren bzw. programmierten Rechneranlagen
- die auftretenden Werte von Strom und Spannung
  sowie der die Temperatur darstellende elektrische Wert werden in einem Registriergerät
  aufgezeichnet.

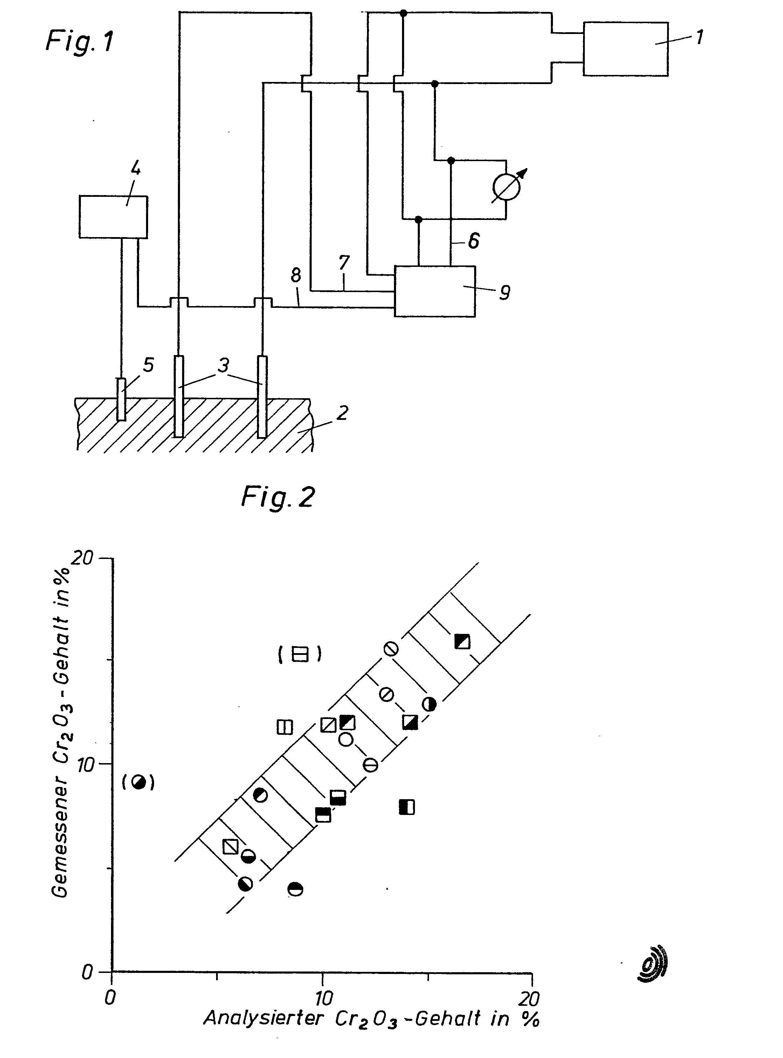

Die Meßanordnung ist in Fig. 1 schematisch
wiedergegeben. Über einen Transformator
1 mit eingebautem Gleichrichter wird
eine Gleichspannung auf die in die Schmelze 2 eintauchenden Molybdänstifte 3 gegeben, die in dem Ausführungsbeispiel einen gegenseitigen Abstand von etwa 15 mm und einen Durchmesser von 2 mm aufweisen. Weiterhin gehört zur Meßanordnung eine Temperaturmeßeinrichtung 4 mit einer in die Schmelze eintauchenden Sonde 5, die ein für den Temperaturbereich geeignetes Thermoelement enthält.

Die Elektroden 3 und die Temperaturmeßeinrichtung 4 sind über die Leitungen 6, 7, 8 an ein schreibendes Registriergerät 9 angeschlossen, welches die die Grundlage der Berechung bildenden Wert registriert.

Zur Überprüfung der Messungen wurde der folgende Versuch durchgeführt: Eine Charge wurde im Elektrolichtbogenofen mit einem zunächst normalen Chargenablauf fertiggemacht, d. h. Schrott wurde mit entsprechenden Gehalten an Chromträgern eingesetzt und geschmolzen, wobei mit Sauerstoff geblasen wurde. Nach dem Niederschmelzen des Schrottes wurde eine Probe des Metallbades gezogen und in das Laboratorium geschickt. Nach vorliegender Analyse des Metallbades wurden aufgrund einer Legierungsrechnung Legierungsmengen in den Ofen chargiert und die Metallschmelze auf ca. 1700°C aufgeheizt. Anschließend wurde die normale Menge an Reduktionsmitteln (Ferrosilizium) in das Metallbad eingebracht und wurde die Metallschmelze aus dem Elektrolichtbogenofen eine Pfanne mit einer Abstichtemperatur von 1720°C abgestochen.

Der betriebliche Ablauf weist nun vor der
weiteren Behandlung in einer Vakuumfrischanlage
das Abschlacken der Pfanne an. Eine Schlackenprobe wurde vor dem Entfernen der Schlacke
entnommen und in das Laboratorium geschickt.
Nach neun Tagen lag die Schlackenanalyse
mit folgenden Gehalten vor (Gehalte in Gewichtsprozent):

$CaO$     =   31,6 %

$SiO_2$    =   26,2 %

$Al_2O_3$  =    8,5 %

$CaF_2$   =    6,5 %

$FeO$     =    2,9 %

$MgO$     =    4,9 %

$Cr_2O_3$  =  19,4 %

Das in der Schlackenphase enthaltene Chromoxid von rund 20 % lag bei diesem Versuch besonders
hoch. Es hätte bei direkter Kenntnis unmittelbar
nach dem Abstich durch den Zusatz weiterer
Reduktionsmittel zu metallischem Chrom reduziert
werden können. Die im weiteren betrieblichen
Ablauf der Metallschmelze benötigte zusätzliche
Menge an Chrom in Höhe von rund 1000 kg bei
dieser einen Charge hätte eingespart werden können,
wenn die unmittelbare und ohne Zeitverzögerung
erfolgte Bestimmung des Chromoxidgehalts in der
auf der Schmelze befindlichen flüssigen Schlacke
vorgenommen worden wäre.

- 8 -

In Fig. 2 findet sich eine Gegenüberstellung
der gemessenen und der analysierten Chromoxidgehalte. Die gemessenen Chromoxidgehalte wurden
mittels eines auf eine bestimmte Versuchsanordnung abgestimmten Rechnerprogramms aus den
gemessenen elektrischen Werten errechnet. Die
analysierten Chromoxidanteile ergaben sich aus
chemischer Analyse.

Es zeigt sich, daß sich die Werte recht gut
in einer unter 45° verlaufenden Zone unterbringen
lassen, d. h. daß die gemessenen und analysierten
Werte recht gut miteinander übereinstimmen. Für
das angestrebte Ziel der Einstellung möglichst
geringer Chromoxidgehalte in der Schlacke ist
die Genauigkeit des Meßverfahrens ausreichend.

0021316

Krupp Stahlwerke Südwestfalen AG
in 5900 Siegen 1
und

Patentansprüche.

1. Verfahren zur Ermittlung der Gehalte an
Schwermetalloxiden, insbesondere Chromoxiden
in flüssigen Schlacken von flüssigen Legierungen,
die einer ein- oder mehrstufigen Behandlung
unterworfen werden oder wurden, vorzugsweise
von Legierungen auf der Basis Eisen und/oder
Nickel und/oder Kobalt, dadurch gekennzeichnet,
daß die elektrische Leitfähigkeit der Schlacken
ermittelt wird.

2. Verfahren nach Anspruch 1, dadurch gekennzeichnet, daß die Leitfähigkeitsermittlung während
einer Vakuumbehandlung erfolgt.

3. Verfahren nach Anspruch 1 oder 2, dadurch
gekennzeichnet, daß die Leitfähigkeitsermittlung
fortgesetzt erfolgt.

4. Verfahren nach einem der Ansprüche 1 bis 3, dadurch gekennzeichnet, daß die Leitfähigkeitsmessung mittels einer ortsstabil eingebauten Meßvorrichtung ermittelt wird.

5. Verfahren nach einem der Ansprüche 1 bis 4, dadurch gekennzeichnet, daß die die Leitfähigkeit darstellenden elektrischen Signale als Eingangssignale für eine Steuerung der Gehalte an Schwermetalloxiden in der Schlacke verwendet werden.

6. Verfahren nach einem der Ansprüche 1 bis 5, dadurch gekennzeichnet, daß während der Messung das Frischen mit Sauerstoff und/oder das Spülen mit einem gasförmigen Medium unterbrochen werden.

7. Verfahren nach einem der Ansprüche 1 bis 6, dadurch gekennzeichnet, daß während der Messung die Zugabe von Kalk nicht erfolgt.

8. Verfahren nach einem der Ansprüche 1 bis 7, dadurch gekennzeichnet, daß die Schlacke durch Spülen der Schmelze mit einem inerten Gas homogenisiert wird.

9. Verfahren nach einem der Ansprüche 1 bis 8, dadurch gekennzeichnet, daß gleichzeitig mit den Werten von Strom und Spannung, die den spezifischen Widerstand bzw. die Leitfähigkeit der Schlacke ergeben, die Schlackentemperatur mittels geeigneter Sonden gemessen wird.

- 3 -

10. Vorrichtung zur Durchführung des Verfahrens nach Anspruch 1 mit mindestens zwei in die Schlacke, jedoch nicht in die flüssige Legierung eintauchenden und von der Schlacke nicht angreifbaren Elektroden, insbesondere Molybdänstiften, sowie einer Einrichtung zur Messung des elektrischen Widerstandes zwischen den Elektroden, dadurch gekennzeichnet, daß die Elektroden (3, 3) einen Abstand von 10 mm bis 30 mm voneinander aufweisen.

*Fig.1*

*Fig. 2*

Europäisches
Patentamt

**EUROPÄISCHER RECHERCHENBERICHT**

0021316

Nummer der Anmeldung

EP 80 10 3361.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B - 1 290 557 (FRIED. KRUPP) <br> * Spalte 4 * <br> -- | 1 |
| | DE - B2 - 2 529 391 (FRIED. KRUPP) <br> * Spalten 3 und 4 * <br> -- | 1 |
| A | DE - A - 1 958 224 (SALZGITTER HÜTTEN-WERK) <br> -- | |
| A | DE - A1 - 2 438 122 (EDELSTAHLWERK WITTEN) <br> -- | |
| A | US - A - 3 785 427 (METALLURGIE HOBO-KEN-OVERPETT) <br> -- | |
| A,D | STAHL UND EISEN, Band 99, Nr. 3, <br> Februar 1979, <br> Düsseldorf <br> "Umschau" <br> Seiten 113 bis 116 <br> ---- | |

**KLASSIFIKATION DER ANMELDUNG (Int.Cl.3)**

C 21 C 5/30
G 01 N 27/06

**RECHERCHIERTE SACHGEBIETE (Int. Cl.3)**

C 21 C 5/30
G 01 N 27/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 10-10-1980 | SUTOR |

EPA form 1503.1   06.78